## Europäisches Patentamt

## European Patent Office

## Office européen des brevets

(19)

(11) **EP 0 371 857 B1**

(12)

# FASCICULE DE BREVET EUROPEEN

(45) Date de publication et mention
de la délivrance du brevet:
**14.10.1998 Bulletin 1998/42**

(51) Int Cl.⁶: **G06F 1/26**

(21) Numéro de dépôt: **89403259.8**

(22) Date de dépôt: **24.11.1989**

(54) **Interface avec une alimentation électrique et ordinateur comportant un tel interface**

Schnittstelle mit einer Stromversorgung und Rechner, der eine solche Schnittstelle enthält

Interface with electric power supply, and computer having such an interface

(84) Etats contractants désignés:
**AT BE CH DE ES FR GB GR IT LI LU NL SE**

(30) Priorité: **30.11.1988 FR 8815667**

(43) Date de publication de la demande:
**06.06.1990 Bulletin 1990/23**

(73) Titulaire: **LABORATOIRE EUROPEEN DE RECHERCHES ELECTRONIQUES AVANCEES**
**92400 Courbevoie (FR)**

(72) Inventeur: **Coschieri, Jean-Claude**
**F-92045 Paris la Défense (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**EP-A- 183 608**　　　　　**FR-A- 2 456 349**
**GB-A- 2 154 834**

- ELECTRONIC DESIGN, vol. 31, no. 13, juin 1983, pages 166-168; W. FREEMAN: "Remote display draws power from RS-232 line"
- H. Lilien: Introduction à la micro-informatique, Du microprocesseur au micro-ordinateur; Editions Radio, Paris 1980; pages 153 - 154

EP 0 371 857 B1

## Description

L'invention se rapporte à un interface comportant une alimentation électrique.

Il est possible d'effectuer la réduction de l'encombrement d'appareils électroniques en tirant parti de la miniaturisation des composants modernes. Toutefois, certains appareils, comme par exemple les ordinateurs doivent pouvoir communiquer avec l'extérieur par l'intermédiaire d'interfaces appropriés et des connecteurs. Ainsi la réduction du nombre de broches des connecteurs permet d'en réduire l'encombrement mais en limite les possibilités. Par exemple dans les liaisons série entre ordinateurs, on est passé d'un connecteur comportant 25 broches à un connecteur comportant 9 broches appelé SUB D9M. Ce connecteur a un encombrement réduit mais toutes ses broches sont utilisées, ainsi il n'est pas possible d'adjoindre, par exemple une alimentation pour un périphérique externe. Ainsi, dans les ordinateurs de type connu il n'est pas possible d'utiliser la liaison série pour effectuer la connexion d'un périphérique externe devant d'être alimenté en courant comme par exemple un interface MIDI destiné au pilotage d'instruments de musique. Or, il s'avère que certains signaux émis par la liaison série peuvent, à condition d'être amplifiés, servir d'alimentation électrique extérieure dans la mesure où leur tension reste constante durant la phase pendant laquelle le périphérique extérieur a besoin d'être alimenté. Par exemple on amplifie le signal appelé DTR ou $\overline{DTR}$ (Data Terminal Ready) pour alimenter un interface MIDI externe. L'interface MIDI tire 5 Volts à partir d'une tension approximativement égale à 12 Volts fournie par l'interface selon la présente invention.

Le document "Remote display draws power from RS-232 line", W. Freeman, Electronic design, vol.31, no. 13, Juin 1983, p. 166 et 168 expose un circuit à condensation qui, à partir de signal de données série d'un interface RS 232, élabore une tension de 5 V au niveau d'un appareil extérieur, dans le but d'alimenter celui-ci. Mais le courant ainsi fourni est limité au débit de l'interface.

Le document EP-A-0 183 608 concerne un système de sécurité dans un ordinateur comportant une connexion alimentant un appareil connecté.

Le document "Introduction à la micro-informatique, du microprocesseur au micro-ordinateur", Editions Radio, par H. Lilien, Paris 1980, p. 153 à 154, concerne un interface parallèle.

L'invention comme définie dans la revendication 1 a principalement pour objet un interface d'ordinateur comportant une broche de sortie et un circuit fournissant un signal, ladite interface étant caractérisée en ce qu'elle comporte des moyens d'amplification, lesdits moyens d'amplification étant branchés entre ledit circuit et ladite broche de sortie, lesdits moyens d'amplification transmettant ledit signal à ladite broche, lesdits moyens d'amplification fournissant une alimentation électrique sur ladite broche pour une valeur dudit signal.

L'invention a aussi pour objet un interface caractérisé par le fait qu'un moyen d'amplification comporte un transistor commandé par ledit signal.

L'invention a aussi pour objet un interface caractérisé par le fait que ledit interface est un interface série de type RS 232.

L'invention a aussi pour objet un interface caractérisé par le fait qu'on utilise le signal $\overline{DTR}$ (Data Terminal Ready) de l'interface série RS 232.

L'invention a aussi pour objet un interface caractérisé par le fait qu'il comporte un connecteur du type SUB D9M.

L'invention a également pour objet un ordinateur caractérisé par le fait qu'il comporte un interface.

L'invention a également pour objet un dispositif comportant un interface MIDI et un ordinateur caractérisé par le fait que l'interface MIDI est connecté à l'ordinateur par l'intermédiaire de l'interface.

L'invention sera mieux comprise au moyen de la description ci-après et des figures annexées données comme des exemples non limitatifs parmi lesquelles :

- la figure 1 est un schéma d'un dispositif selon la présente invention ;
- la figure 2 est un schéma d'un exemple particulier de réalisation du dispositif selon la présente invention ;
- la figure 3 est un schéma d'un dispositif selon la présente invention.

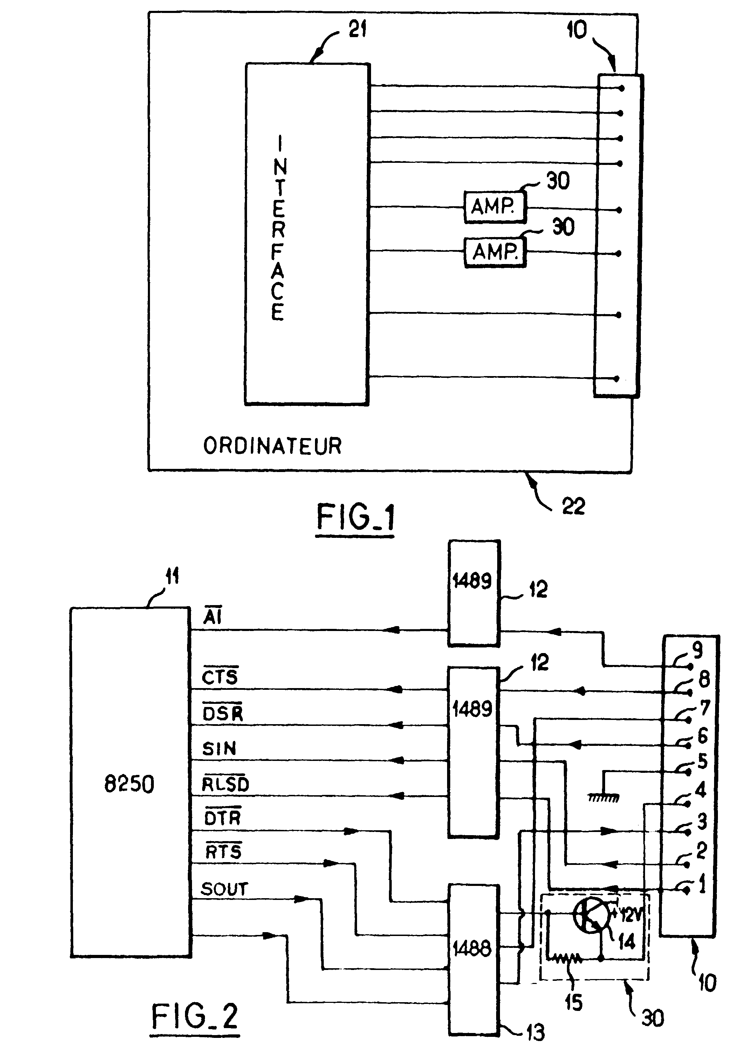

Sur la figure 1, on peut voir un appareil numérique 22 par exemple un ordinateur comportant un connecteur 10. Le connecteur 10 est relié à un interface 21. Les connexions peuvent être la communication des données par exemple numériques entre l'ordinateur et l'extérieur. Sur au moins un des plots du connecteur se trouve une alimentation électrique obtenue à partir du signal fourni par l'interface 21. L'alimentation électrique est obtenue par l'amplification par des amplificateurs 30 des signaux fournis par l'interface 21. Les amplificateurs 30 doivent pouvoir fournir au moins le courant demandé par le périphérique externe. Toutefois, il est possible de limiter le courant maximal, par exemple pour répondre à des normes.

Il est bien entendu que l'invention n'est pas limitée à des ordinateurs mais que d'autres dispositifs comportant des sorties numériques comme par exemple des synthétiseurs digitaux, des lecteurs de disque optique numérique ou des appareils ménagers comportant les interfaces de commande ne sortent pas du cadre de la présente invention.

Sur la figure 2, on peut voir un exemple particulièrement avantageux du dispositif selon la présente invention concernant un interface série et un connecteur mâle 10 du type SUB D9M. L'interface série comporte par exemple un circuit intégré 11 vendu par la Société NATIONAL SEMICONDUCTOR sous la référence 8250, un buffer de sortie 13 vendu par la Société MOTOROLA sous la référence 1488 et deux buffers d'entrée 12 vendus par la Société MOTOROLA sous la référence 1489.

Dans l'exemple illustré sur la figure 2, la borne 1 est reliée à travers un circuit 12 au signal RLSD du circuit 11 ;

la borne 2 est reliée à travers le circuit 12 au signal SIN du circuit 11 ;
la borne 3 est reliée à travers le circuit 13 au signal SOUT du circuit 11 ;
la borne 4 est reliée à travers le circuit 13 au signal $\overline{DTR}$ du circuit 11 ;
la borne 5 est reliée à la masse ;
la borne 6 est reliée à travers le circuit 12 au signal $\overline{DSR}$ du circuit 11 ;
la borne 7 est reliée à travers le circuit 13 au signal $\overline{RTS}$ du circuit 11 ;
la borne 8 est reliée à travers le circuit 12 au signal $\overline{CTS}$ du circuit 11 ;
la borne 9 est reliée à travers le circuit 12 au signal $\overline{RI}$ du circuit 11.

Dans le dispositif selon la présente invention, il est impératif de déterminer un signal qui, d'une part, est susceptible de fournir la tension d'alimentation désirée, et d'autre part, ne soit pas perturbée par la présence de dispositif d'amplification. Dans l'exemple illustré sur la figure 2, on utilise le signal $\overline{DTR}$. Dans les interfaces série RS 232, le signal $\overline{DTR}$ est égal à plus 12 Volts pour indiquer un niveau logique "1" et est égal à moins 12 Volts pour indiquer un niveau logique "0".

Dans l'exemple de réalisation illustré sur la figure 2, la sortie du circuit 13 est reliée d'une part à la base d'un transistor NPN 14 et d'autre part à une résistance 15. La résistance 15 est par exemple égale à 1 000 Ohms. L'émetteur du transistor est relié à la borne 4 de la prise 10. Le collecteur du transistor est relié à une alimentation + 12 Volts. En fonctionnement normal, quand l'interface MIDI est relié à la prise 10 le signal $\overline{DTR}$ est positif, le transistor 14 conduit le courant et permet donc d'alimentation l'interface MIDI. En utilisation normale de l'interface série RS 232 quand la tension du signal $\overline{DTR}$ est égale à + 12 Volts, ce signal se propage à la borne 4 sans être modifié par le transistor 14 de la résistance 15. Par contre, quand le signal $\overline{DTR}$ est égal à - 12 Volts le transistor 14 est bloqué et le signal passe par l'intermédiaire de la résistance 15.

On voit donc que l'interface série se comporte exactement de façon habituelle, mais que si cela est nécessaire, elle permet en plus de fournir une alimentation électrique. Il est bien sûr possible de limiter le courant maximal susceptible d'être débité par l'interface série pour des raisons de sécurité ou pour répondre à des normes. Par exemple on peut prendre un transistor ne pouvant pas débiter un courant supérieur à 20 mA ou connecter en série une résistance limitant le courant.

Si on veut fournir une tension négative on utilisera avantageusement un transistor PNP à partir d'un signal - 12 Volts.

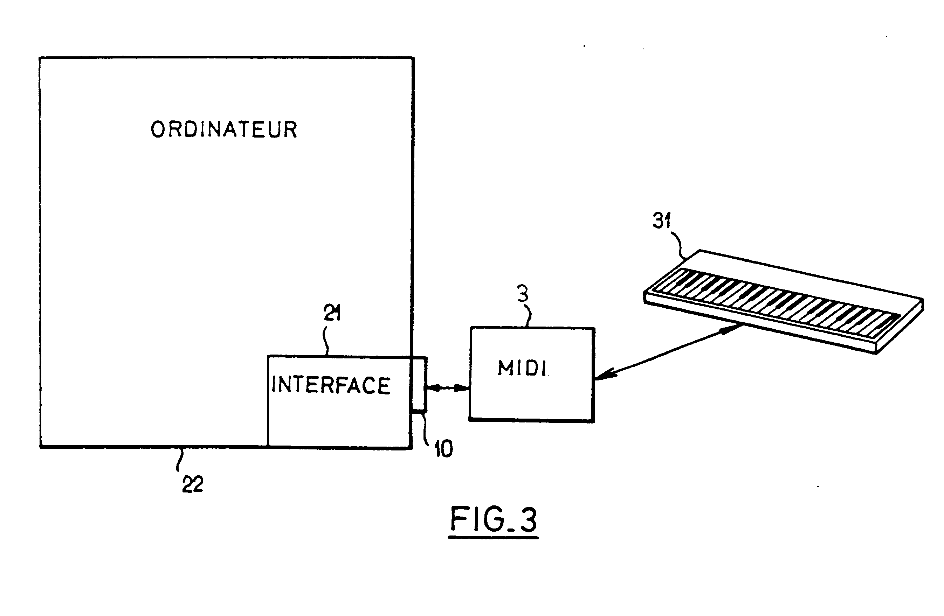

Sur la figure 3, on peut voir un ordinateur 22 selon la présente invention relié par l'intermédiaire d'un interface MIDI 3 à, par exemple, un synthétiseur 31. L'interface MIDI 3 est relié par l'intermédiaire du connecteur 10 de l'interface RS 232 21 à l'ordinateur 22. Dans le cas où l'interface MIDI 3 requiert une tension d'alimentation de 5 Volts qui comporte par exemple une diode Zenner de 5 Volts placée entre les sorties 5 et les sorties 4 du connecteur 10. Dans le dispositif selon la présente invention il est possible de relier un ordinateur 22 à travers un interface série 21 et un connecteur à 9 broches du type SUB D9M à un interface MIDI 3. Ainsi d'une part on économise un connecteur dédié à l'interface MIDI et d'autre part il est possible de réduire la taille du connecteur 10.

L'invention s'applique à la réalisation d'interface susceptible de fournir une alimentation électrique à un dispositif extérieur, ainsi qu'aux ordinateurs comportant de tels interfaces.

L'invention s'applique principalement à la réalisation d'ordinateurs susceptibles de fonctionner sous le système d'exploitation MS-DOS et capables de fournir une tension d'alimentation à l'interface MIDI par l'intermédiaire d'un interface série RS 232 et d'un connecteur SUB D9M.

## Revendications

1. Interface d'ordinateur comportant une broche de sortie (4) et un circuit (11) fournissant un signal (DTR), ladite interface étant caractérisée en ce qu'elle comporte

   des moyens d'amplification (30),
   lesdits moyens d'amplification étant branchés entre ledit circuit (11) et ladite broche de sortie (4),
   lesdits moyens d'amplification (30) transmettant ledit signal (DTR) à ladite broche (4),
   lesdits moyens d'amplification (30) fournissant une alimentation électrique sur ladite broche (4) pour une valeur dudit signal (DTR).

2. Interface selon la revendication 1, caractérisée en ce que les moyens d'amplification (30) comportent un transistor (14) commandé par ledit signal (DTR).

3. Interface selon la revendication 2, caractérisé en ce que le collecteur dudit transistor (14) est relié à une source d'alimentation, l'émetteur dudit transistor (14) étant relié à ladite broche (4).

4. Interface selon l'une des revendications 2 ou 3, caractérisé en ce que les moyens d'amplification comportent une résistance (15) placée en parallèle sur ledit transistor (14), entre la base dudit transistor (14) et son émetteur.

5. Interface selon l'une des revendications précédentes, caractérisé en ce que ledit signal (DTR) est le signal DTR ("Data Terminal Ready") de l'interface série RS 232.

6. Interface selon l'une des revendications précédentes, caractérisé en ce qu'il comporte un connecteur (10) du type SUB D9M à neuf broches de connexion.

7. Interface selon l'une des revendications précédentes, caractérisé en ce qu'il connecte un ordinateur (22) et une interface MIDI (3).

**Patentansprüche**

1. Schnittstelle für einen Rechner mit einer Ausgangsklemme (4) und einer ein Signal (DTR) liefernden Schaltung (11), dadurch gekennzeichnet, daß sie

Verstärkungsmittel (30) enthält,
daß die Verstärkungsmittel zwischen der Schaltung (11) und der Ausgangsklemme (4) liegen,
daß die Verstärkungsmittel (30) das Signal (DTR) zu der Ausgangsklemme (4) übertragen und die Verstärkungsmittel (30) eine Betriebsspannung an der Ausgangsklemme (4) für einen Wert des Signals (DTR) bilden.

2. Schnittstelle nach Anspruch 1,
dadurch gekennzeichnet, daß die Verstärkungsmittel (30) einen durch das Signal (DTR) gesteuerten Transistor (14) enthalten.

3. Schnittstelle nach Anspruch 2,
dadurch gekennzeichnet, daß der Kollektor des Transistors (14) mit einer Betriebsspannungsquelle und der Emitter des Transistors (14) mit der Ausgangsklemme (4) verbunden ist.

4. Schnittstelle nach einem der Ansprüche 2 oder 3, dadurch gekennzeichnet, daß die Verstärkungsmittel einen Widerstand (15) enthalten, der parallel zu dem Transistor (14) zwischen der Basis und dem Emitter des Transistors (14) liegt.

5. Schnittstelle nach einem der vorangehenden Ansprüche,
dadurch gekennzeichnet, daß das Signal (DTR) das Signal DTR ("Data Terminal Ready") der seriellen Schnittstelle RS 232 ist.

6. Schnittstelle nach einem der vorangehenden Ansprüche,
dadurch gekennzeichnet, daß sie einen Steckverbinder (10) vom Typ SUB D9M mit neun Anschlußklemmen enthält.

7. Schnittstelle nach einem der vorangehenden Ansprüche,
dadurch gekennzeichnet, daß sie einen Rechner (22) und eine Schnittstelle MIDI (3) miteinander verbindet.

**Claims**

1. Computer interface comprising an output pin (4) and a circuit (11) delivering a signal (DTR), the said interface being characterized in that it comprises

amplification means (30),
the said amplification means being wired up between the said circuit (11) and the said output pin (4),
the said amplification means (30) sending the said signal (DTR) to the said pin (4),
the said amplification means (30) delivering an electrical supply on the said pin (4) for a value of the said signal (DTR).

2. Interface according to Claim 1, characterized in that the amplification means (30) comprise a transistor (14) controlled by the said signal (DTR).

3. Interface according to Claim 2, characterized in that the collector of the said transistor (14) is linked to a supply source, the emitter of the said transistor (14) being linked to the said pin (4).

4. Interface according to one of Claims 2 or 3, characterized in that the amplification means comprise a resistor (15) placed in parallel with the said transistor (14), between the base of the said transistor (14) and its emitter.

5. Interface according to one of the preceding claims, characterized in that the said signal (DTR) is the DTR signal ("Data Terminal Ready") of the RS 232 serial interface.

6. Interface according to one of the preceding claims, characterized in that it comprises a connector (10) of the SUB D9M type with nine connection pins.

7. Interface according to one of the preceding claims, characterized in that it connects a computer (22) and a MIDI interface (3).

FIG_1

FIG_2

EP 0 371 857 B1

FIG.3